# FASCICULE DE BREVET EUROPEEN

(11) **EP 3 259 390 B1**
(45) Date de publication et mention de la délivrance du brevet: **03.04.2019**
(21) Numéro de dépôt: 16705982.3
(22) Date de dépôt: 09.02.2016
(51) Int. Cl.: D03D 11/00, D03D 15/00, D03D 25/00

(54) **STRUCTURE FIBREUSE DE RENFORT DE PIÈCES EN MATÉRIAU COMPOSITE A FORTE VARIATION D'ÉPAISSEUR**
FASERGEBILDE FÜR ARMIERUNGSKOMPONENTEN AUS VERBUNDSTOFF MIT HOHER DICKENVARIATION
FIBROUS STRUCTURE FOR REINFORCING COMPONENTS MADE OF COMPOSITE MATERIAL WITH A GREAT VARIATION IN THICKNESS

(30) Priorité: 16.02.2015 FR 1551247
(43) Date de publication de la demande: 27.12.2017
(73) Titulaire: Safran Ceramics, 33185 Le Haillan (FR); SAFRAN, 75015 Paris (FR)
(72) Inventeur: LEFEBVRE, Marie, 33700 Merignac (FR); COUPE, Dominique, 77310 Saint Fargeau-ponthierry (FR); CHARLEUX, François, 33000 Bordeaux (FR)
(74) Mandataire: Desormiere, Pierre-Louis
(86) Numéro de dépôt international: PCT/FR2016/050286
(87) Numéro de publication internationale: WO 2016/132045

(56) Documents cités:
- WO-A2-2013/088039
- US-A1- 2011 110 787
- US-A1- 2012 308 817
- US-A1- 2014 161 626
- US-B2- 7 101 154

## Description

### Arrière-plan de l'invention

La présente invention concerne la réalisation de pièces en matériau composite et plus particulièrement la réalisation par tissage tridimensionnel (3D) ou multicouche de structures fibreuses de renfort pour de telles pièces.

Un domaine d'application de l'invention est la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

L'invention concerne plus particulièrement les pièces en matériau composite comportant localement une ou plusieurs parties de surépaisseur comme c'est le cas par exemple du pied d'une aube de moteur aéronautique qui correspond à une zone de forte variation d'épaisseur dans la pièce en matériau composite. Dans le cas d'une pièce en matériau composite présentant une épaisseur évolutive, le changement d'épaisseur est contrôlé au niveau de la structure fibreuse destinée à former le renfort de la pièce.

La réalisation d'aubes en matériau composite pour des turbomachines a déjà été proposée. On se référera notamment à la demande de brevet US 2011/0311368 déposée conjointement par Snecma et Snecma Propulsion Solide. Cette demande décrit la fabrication d'une aube de turbomachine en matériau composite comprenant un renfort fibreux densifié par une matrice, l'ébauche fibreuse destinée à constituer le renfort est réalisée par tissage multicouche et comporte une première partie d'épaisseur réduite formant préforme de pale et une deuxième partie de surépaisseur formant préforme de pied d'aube. Dans ce cas, la préforme de pied d'aube est réalisée en utilisant un insert afin de former une portion en forme de bulbe au niveau de la partie de l'aube correspondant à son pied.

Cependant, cette technique de formation de pied d'aube complexifie la fabrication industrielle de l'aube et augmente son coût de fabrication car elle engendre des pertes de matière importantes et demande des manipulations délicates qui ralentissent la vitesse de production. En outre, l'insert, lui aussi en matériau composite, doit être densifié et usiné, ce qui entraîne un coût supplémentaire et éventuellement des rejets de pièces.

Le textile de la préforme, mobile par nature, interagit mécaniquement avec l'insert et peut conduire notamment à des cisaillements du textile, rotations de l'insert, déliaisons entre l'insert et le textile, etc.

Par ailleurs, le moulage et la densification de la partie de la préforme destinée à former le pied d'aube s'avèrent délicates en particulier parce que les tolérances sur le profil du pied en forme de bulbe sont très faibles (de l'ordre du dixième de millimètre) et que les exigences en termes de propriétés mécaniques de cette partie de l'aube sont importantes, le pied de l'aube concentrant la majorité des efforts appliqués sur l'aube.

Une autre solution notamment décrite dans les documents US 7 101 154 et US 2011/0311368 consiste à augmenter le titre (donc la section transversale) des fils dans les parties de surépaisseur dans la structure fibreuse afin de réduire la capacité de diminution d'épaisseur lors d'une mise en forme de la structure fibreuse 3D avec compression. Cependant, l'utilisation de fils de titre élevé augmente localement le taux de fibres dans la préforme. Si le taux de fibres est trop important, le réseau de porosité résultant peut ne pas être suffisant pour permettre un bon accès des constituants de la matrice au coeur de la préforme et pour obtenir, par conséquent, un matériau composite homogène présentant de bonnes propriétés mécaniques.

### Objet et résumé de l'invention

Il est donc souhaitable de pouvoir disposer de structures fibreuses 3D ou multicouches comportant des parties de surépaisseur ne présentant pas les inconvénients précités.

A cet effet, selon l'invention, il est proposé une structure fibreuse de renfort de pièce en matériau composite comprenant une pluralité de couches de trame et de couches de chaîne liées entre elles suivant un tissage tridimensionnel ou multicouche, la structure fibreuse comprenant au moins des première et deuxième parties adjacentes dans la direction chaîne, la première partie présentant, dans une direction perpendiculaire aux directions chaîne et trame, une épaisseur supérieure à l'épaisseur de la deuxième partie, caractérisée en ce que des couches de trame situées à coeur de la première partie de la structure fibreuse comprennent des tresses et en ce que les couches de trame s'étendant de chaque côté des couches de trame comprenant les tresses et jusqu'en peau de ladite première partie comprennent des fils ou torons, les tresses présentant une section supérieure à la section des fils ou torons.

Comme expliquée plus en détails ci-après, l'utilisation de tresses à coeur de la structure fibreuse permet d'obtenir une forte variation d'épaisseur entre les première et deuxième parties tout en contrôlant le taux de fibres à coeur dans la première partie. En outre, grâce à leur structure tressée et leur géométrie tubulaire, les tresses permettent une très bonne infiltration à coeur de la structure fibreuse des constituants de la matrice.

La structure fibreuse de l'invention est entièrement textile (i.e. sans ajout d'insert) et les fils de cette dernière sont liés entre eux par tissage 3D ou multicouche ce qui permet à la structure d'être indélaminable.

Selon un premier aspect particulier de la structure de l'invention, les première et deuxième parties comprennent le même nombre de fils de chaîne tissés continument entre lesdites première et deuxième parties. Les couches de fils de chaîne présentes à coeur de la première partie sont éclatées de manière à disposer d'un nombre de couches de fils de chaîne plus élevé dans la première partie que dans la deuxième partie. La première partie comprend à coeur un nombre de couches de fils de chaîne supérieur au nombre de couches de fils de chaîne présentes à coeur de la deuxième partie.

En divisant ainsi (i.e. en faisant varier la contexture) des couches de fils de chaîne à coeur dans la première partie, il est possible de contrôler le taux de fibre à coeur dans la première partie tout en maintenant un ratio chaîne/trame satisfaisant en peau sur toute la structure fibreuse. La première partie peut par exemple comprendre à coeur un nombre de fils de chaîne correspondant au double du nombre de couches de fils de chaîne présentes à coeur de la deuxième partie.

Selon un deuxième aspect particulier de la structure de l'invention, une ou plusieurs couches de trame situées au voisinage des couches de trame comprenant les tresses comprennent des fils ou torons ayant un titre supérieur au titre des fils ou torons des couches de trame situées en peau de la première partie.

Cela permet de contrôler le taux de fibres dans une partie de la structure où l'épaisseur varie.

Selon un troisième aspect particulier de la structure de l'invention, au moins une partie des couches de trame situées à coeur de la première partie comprennent des tresses ou des fils ou torons ayant une section décroissante en direction de la deuxième partie.

Cela permet également de contrôler le taux de fibres dans une partie de la structure où l'épaisseur varie.

Selon un quatrième aspect particulier de la structure de l'invention, les tresses présentent un angle de tressage d'environ 45°. Un angle de 45° permet d'augmenter le réseau de macroporosités à coeur et d'améliorer, par conséquent, l'infiltrabilité de la structure.

L'invention a également pour objet une pièce en matériau composite comprenant un renfort fibreux densifié par une matrice, ledit renfort fibreux étant constitué par une structure fibreuse selon l'invention.

Cette pièce peut notamment correspondre à une aube de turbine, la première partie de la structure fibreuse constituant la partie de pied d'aube du renfort fibreux.

L'invention a encore pour objet un procédé de fabrication d'une structure fibreuse par tissage tridimensionnel ou multicouche entre une pluralité de couches de trame et de couches de chaîne, la structure fibreuse comprenant au moins des première et deuxième parties adjacentes dans la direction chaîne, la première partie présentant, dans une direction perpendiculaire aux directions chaîne et trame, une épaisseur supérieure à l'épaisseur de la deuxième partie, caractérisé en ce qu'on insert des tresses dans les couches de trame situées à coeur de la première partie de la structure fibreuse et en ce qu'on utilise des fils ou torons dans les couches de trame s'étendant de chaque côté des couches de trame comprenant des tresses et jusqu'en peau de ladite première partie, les tresses présentant une section supérieure à la section des fils ou torons.

Selon un premier aspect particulier du procédé de l'invention, les première et deuxième parties comprennent le même nombre de fils de chaîne tissés continument entre lesdites première et deuxième parties. Les couches de fils de chaîne présentes à coeur de la première partie sont éclatées de manière à disposer d'un nombre de couches de fils de chaîne plus élevé dans la première partie que dans la deuxième partie. La première partie comprend à coeur un nombre de couches de fils de chaîne supérieur au nombre de couches de fils de chaîne présentes à coeur de la deuxième partie. La première partie peut par exemple comprendre à coeur un nombre de fils de chaîne correspondant au double du nombre de couches de fils de chaîne présentes à coeur de la deuxième partie.

Selon un deuxième aspect particulier du procédé de l'invention, une ou plusieurs couches de trame situées au voisinage des couches de trame comprenant des tresses comprennent des fils ou torons ayant un titre supérieur au titre des fils ou torons des couches de trame situées en peau de la première partie.

Selon un troisième aspect particulier du procédé de l'invention, au moins une partie des couches de trames situées à coeur de la première partie comprennent des tresses ou des fils ou torons ayant une section décroissante en direction de la deuxième partie.

Selon un quatrième aspect particulier du procédé de l'invention, les tresses présentent un angle de tressage d'environ 45°.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique illustrant le tissage multicouche d'une structure fibreuse pour la fabrication d'une aube de moteur aéronautique conformément à un mode de réalisation de l'invention,
- les figures 2A à 2X sont des vues en coupe trame à échelle agrandie représentant partiellement 24 plans successifs d'une armure de tissage d'une partie de surépaisseur de la structure fibreuse de la figure 1,
- la figure 3 est une vue schématique en perspective d'une préforme fibreuse d'aube issue de la structure fibreuse de la figure 1,
- la figure 4 est une vue schématique en perspective d'une aube en matériau composite obtenue par densification par une matrice de la préforme de la figure 4.

### Description détaillée de modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique dans le cas de composites thermostructuraux.

La structure fibreuse de l'invention est obtenue par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

Il est avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou coeur, et une partie externe, ou peau adjacente à une surface extérieure de la structure fibreuse, la peau est réalisée de préférence par tissage avec une armure de type toile, satin ou sergé afin de limiter les irrégularités de surface, une armure de type satin procurant en outre un aspect de surface lisse. Une variation d'armure de tissage en peau peut être réalisée à la surface extérieure de la structure fibreuse pour conférer des propriétés particulières voulues par exemple en passant d'une armure de type toile privilégiant une liaison serrée à une armure de type satin privilégiant un état de surface lisse.

Conformément à l'invention, afin de former une portion de forte épaisseur dans la structure fibreuse tout en contrôlant le taux de fibres dans cette portion, des tresses sont utilisées pour le tissage à coeur de la structure fibreuse. Des fils ou torons de titres différents entre coeur et peau et/ou entre chaîne et trame peuvent également être utilisés pour obtenir un rapport dans des limites souhaitées entre le taux volumique de fibres en chaîne et le taux volumique de fibres en trame.

Il est avantageux aussi pour obtenir des propriétés mécaniques aussi peu inhomogènes que possible au sein d'une pièce en matériau composite, de favoriser une densification de la structure fibreuse de renfort, avec un gradient de densification aussi faible que possible entre le coeur de la structure fibreuse et la peau de celle-ci, notamment dans le cas de densification CVI. A cet effet, pour favoriser l'accès au coeur de la préforme, le tissage à coeur peut être réalisé par tissage interlock, qui offre une communication aisée entre plusieurs couches de tissu.

Par "tissage interlock", on entend ici une armure de tissage 3D dont chaque couche de chaîne lie plusieurs couches de trames avec tous les fils de la même colonne de chaîne ayant le même mouvement dans le plan de l'armure.

On peut aussi réaliser le coeur et la peau par tissage multicouches avec des armures différentes, notamment une armure de type satin en coeur et une armure de type toile ou sergé en peau.

Il est possible aussi de faire varier l'armure de tissage tridimensionnel dans la partie de coeur, par exemple en combinant différentes armures interlock, ou une armure interlock et une armure de tissage multicouches, ou encore différentes armures de tissage multicouches. II est possible encore de faire varier l'armure de tissage en peau le long de la surface extérieure.

Il peut être souhaitable de faire varier le titre, c'est-à-dire la section transversale, des fils ou torons utilisés pour le tissage de la structure fibreuse, en particulier en utilisant des fils ou torons de titres différents entre coeur et peau et/ou entre chaîne et trame. Un titre décroissant entre coeur et peau favorise l'accès à coeur du gaz à travers la peau dans le cas de densification CVI. Les titres peuvent aussi être choisis pour obtenir un rapport dans les limites souhaitées entre le taux volumique de fibres en chaîne et le taux volumique de fibres en trame.

Il peut être souhaitable en outre d'utiliser des fils de natures chimiques différentes entre différentes parties de la structure fibreuse, notamment entre coeur et peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une préforme avec des fibres carbone dans le coeur et des fibres en céramique, par exemple en carbure de silicium (SiC), en peau afin d'accroître la résistance à l'usure et à l'oxydation de la pièce composite au niveau de cette partie de peau.

Un exemple de réalisation d'une structure fibreuse conformément à l'invention est maintenant décrit. Dans cet exemple, le tissage est réalisé sur un métier de type Jacquard.

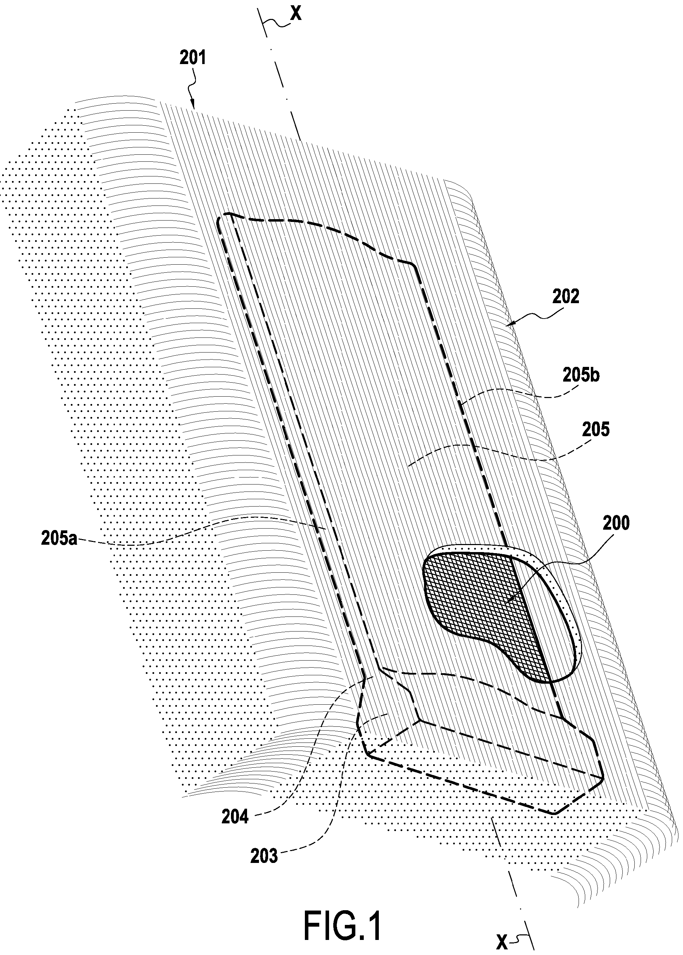

La figure 1 montre très schématiquement une structure fibreuse 200 destinée à former le renfort fibreux d'une aube de moteur aéronautique.

La structure fibreuse 200 est obtenue par tissage tridimensionnel, ou tissage 3D, ou par tissage multicouche réalisé de façon connue au moyen d'un métier à tisser de type jacquard sur lequel on a disposé un faisceau de fils de chaînes ou torons 201 en une pluralité de couches, les fils de chaînes étant liés par des couches de trame 202 également disposés en une pluralité de couches, certaines couches de trames comprenant des tresses comme expliqué ci-après en détails. Un exemple détaillé de réalisation d'une préforme fibreuse destinée à former le renfort fibreux d'une aube pour moteur aéronautique est notamment décrit en détail dans les documents US 7 101 154, US 7 241 112 et WO 2010/061140 dont le contenu est incorporé ici par voie de référence.

La structure fibreuse 200 est tissée sous forme d'une bande s'étendant de façon générale dans une direction X correspondant à la direction longitudinale de l'aube à réaliser. La structure fibreuse présente une épaisseur variable déterminée en fonction de l'épaisseur longitudinale et du profil de la pale de l'aube à réaliser. Dans sa partie destinée à former une préforme de pied, la structure fibreuse 200 présente une partie de surépaisseur 203 déterminée en fonction de l'épaisseur du pied de l'aube à réaliser. La structure fibreuse 200 se prolonge par une partie d'épaisseur décroissante 204 destinée à former l'échasse de l'aube puis par une partie 205 destinée à former la pale de l'aube. La partie 205 présente dans une direction perpendiculaire à la direction X un profil à épaisseur variable entre son bord 205a destiné à former le bord d'attaque de l'aube et son bord 205b destiné à former le bord de fuite de l'aube à réaliser.

La structure fibreuse 200 est tissée en une seule pièce et doit présenter, après découpe des fils non tissés, la forme et les dimensions quasi-définitives de l'aube (« net shape »). A cet effet, dans les parties de variations d'épaisseur de la structure fibreuse, comme dans la partie d'épaisseur décroissante 204, la diminution d'épaisseur de la préforme est obtenue en retirant progressivement des couches de trame au cours du tissage.

Dans tout le texte qui suit et dans tous les dessins, il est mentionné et représenté par convention et souci de commodité, que ce sont les fils de chaîne qui sont déviés de leurs trajets pour saisir des fils ou tresses d'une couche de trame ou de plusieurs couches de trames. Toutefois, une inversion des rôles entre chaîne et trame est possible, et doit être considérée comme couverte aussi par les revendications.

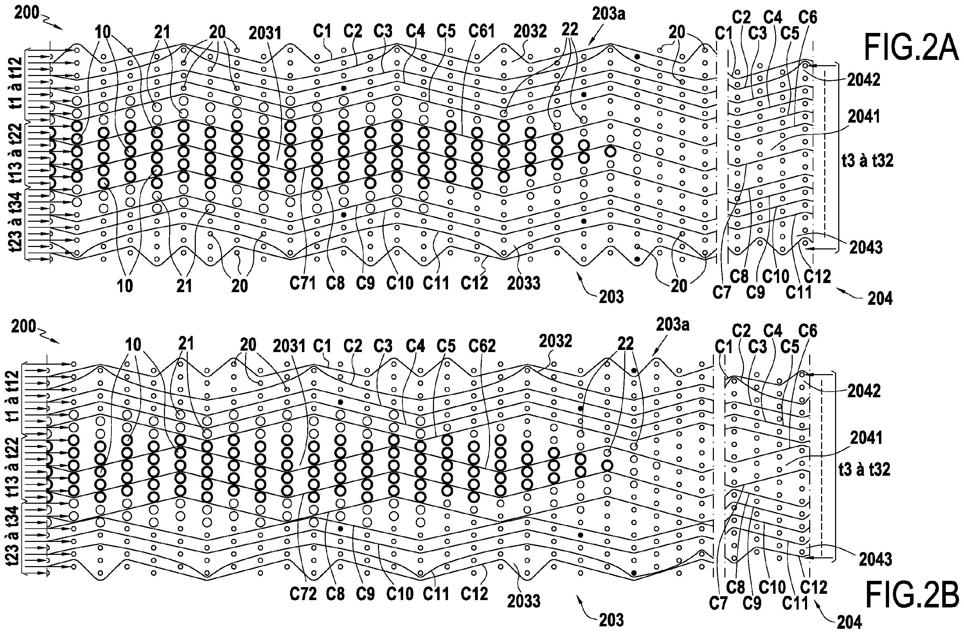

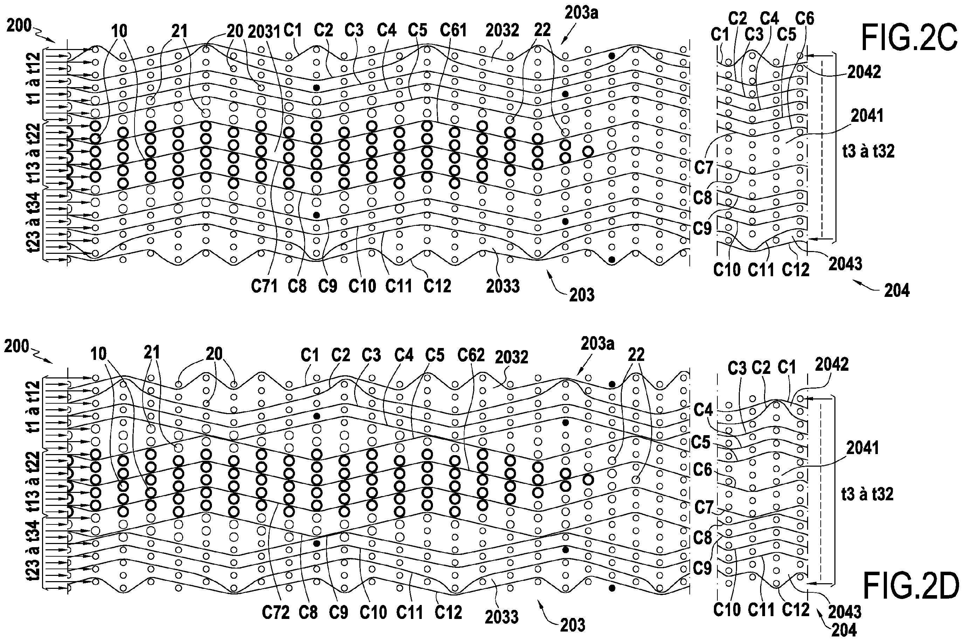

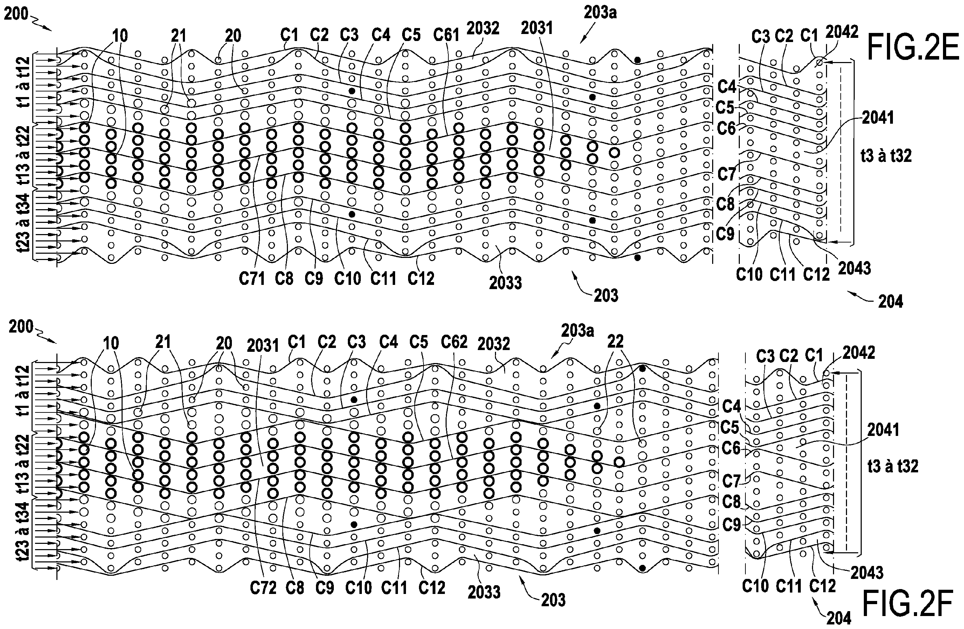

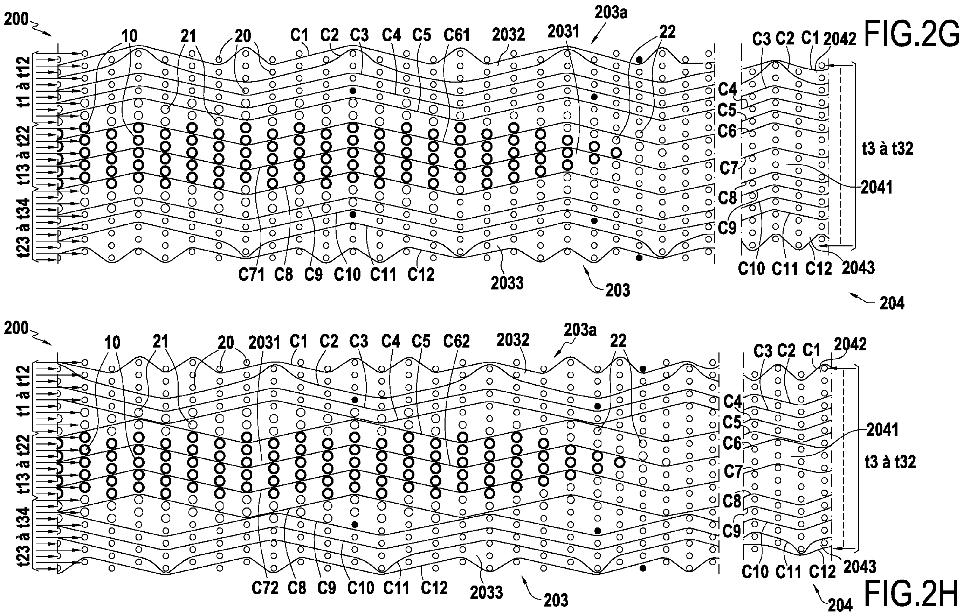

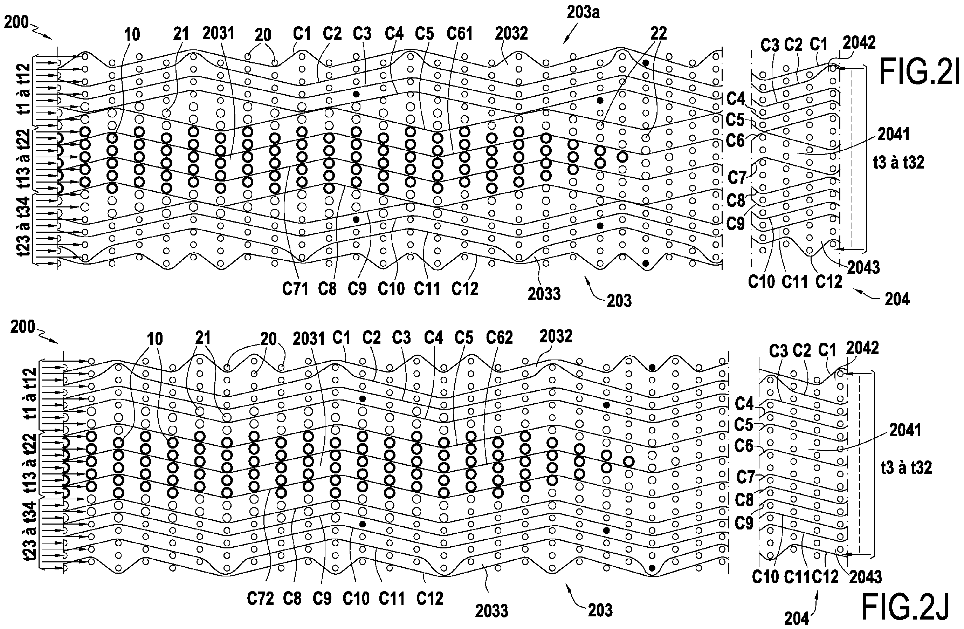

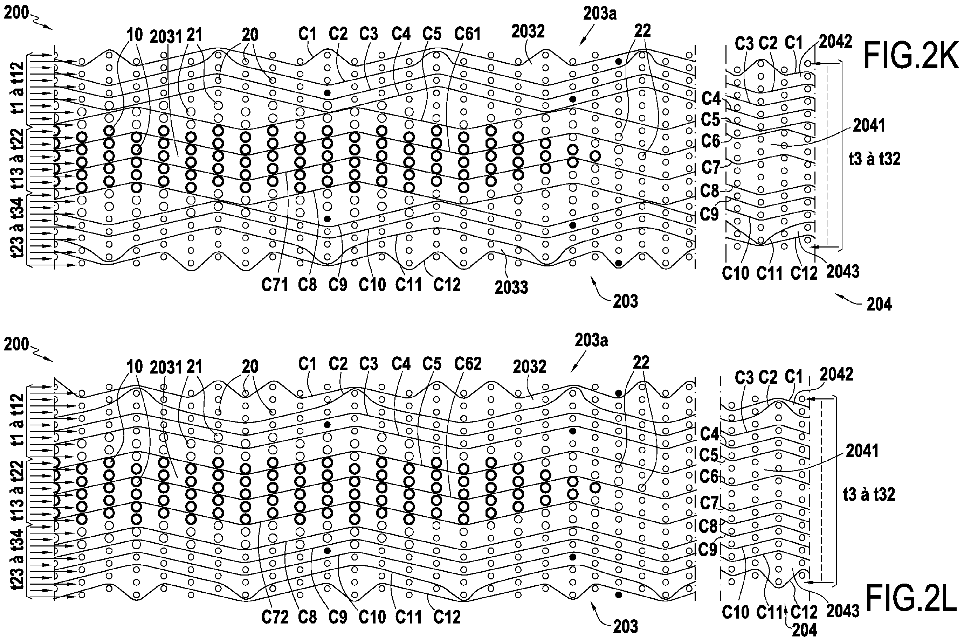

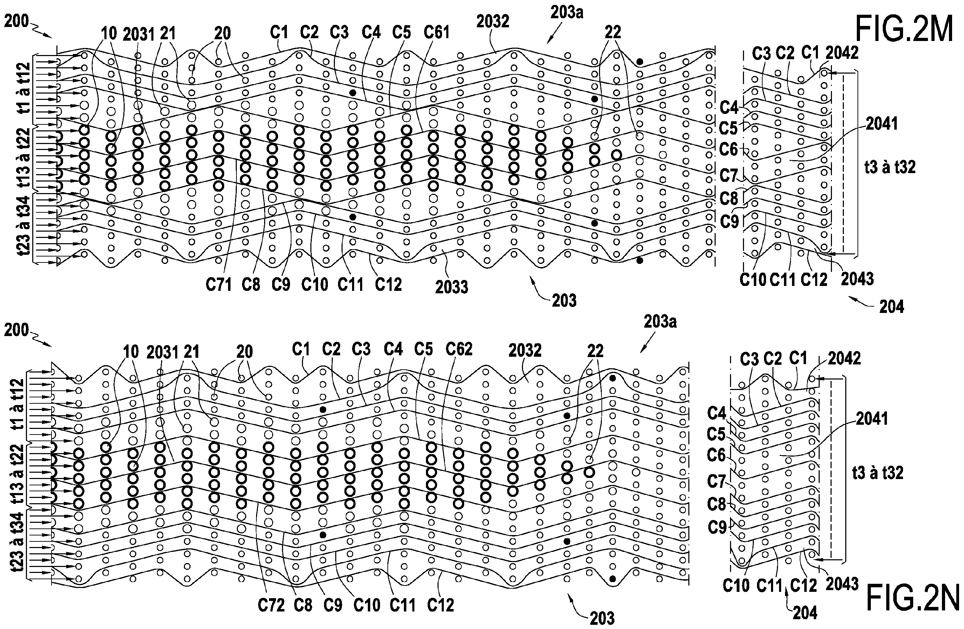

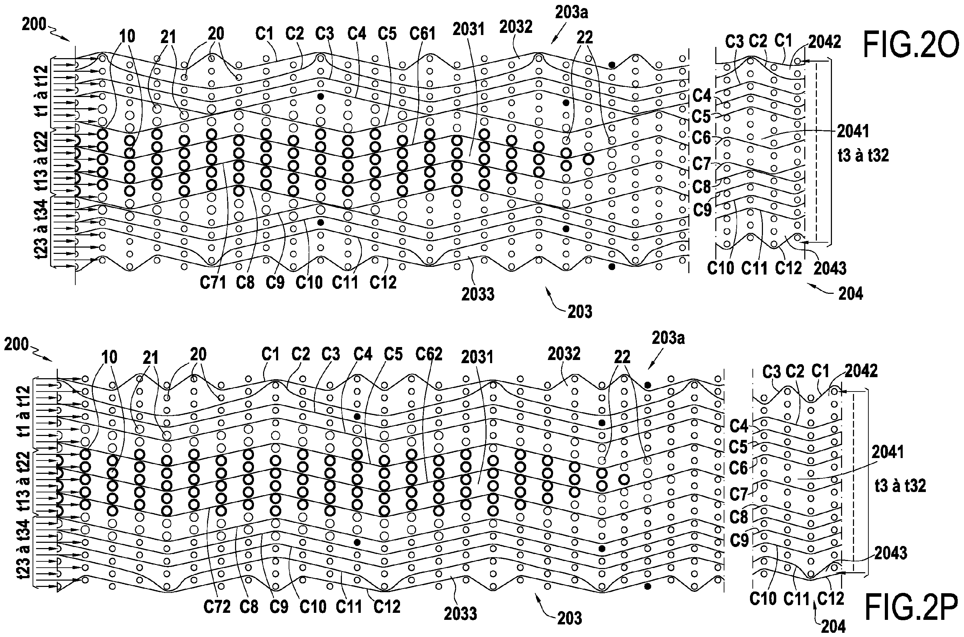

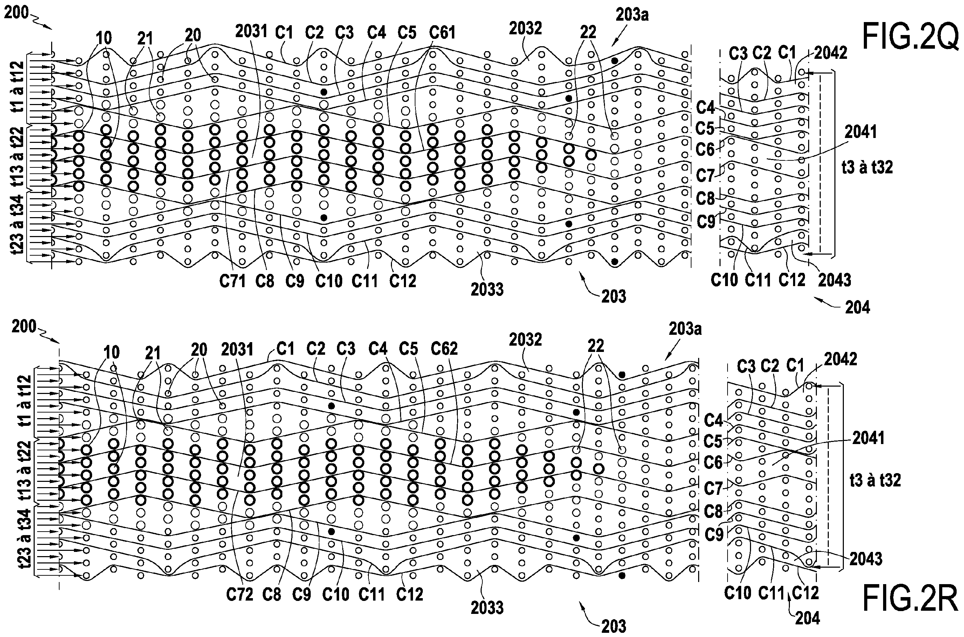

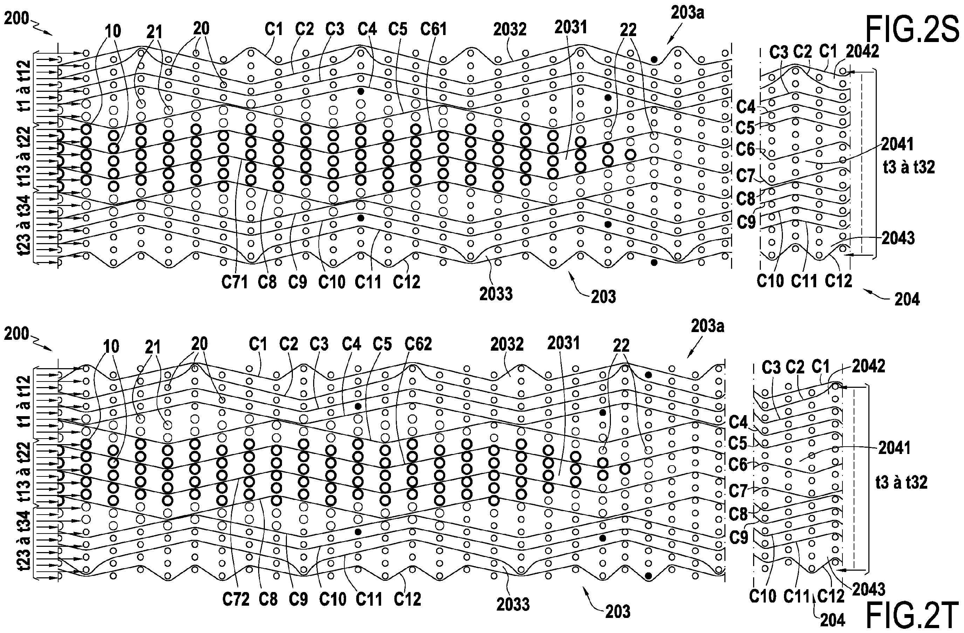

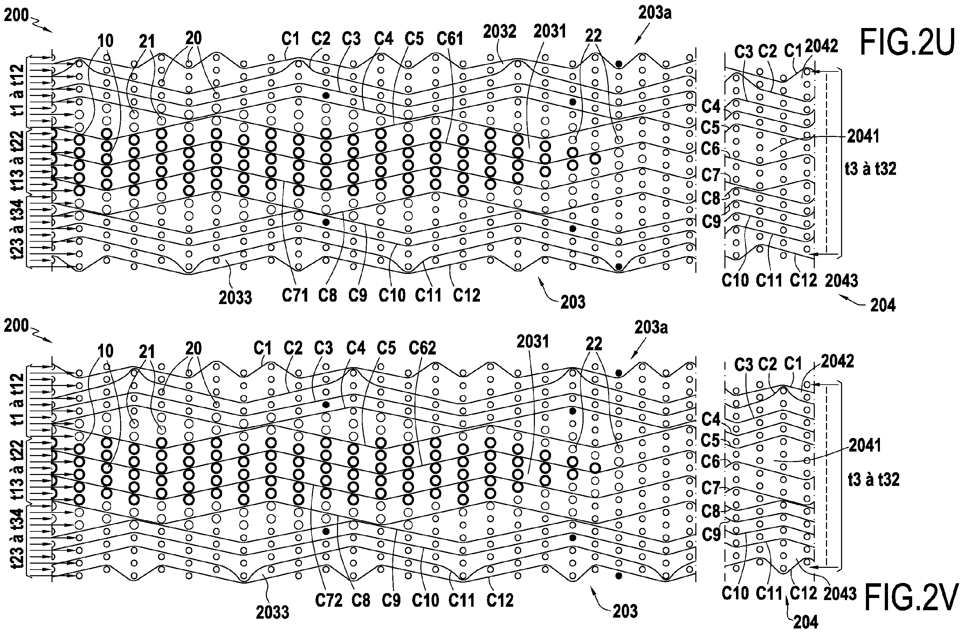

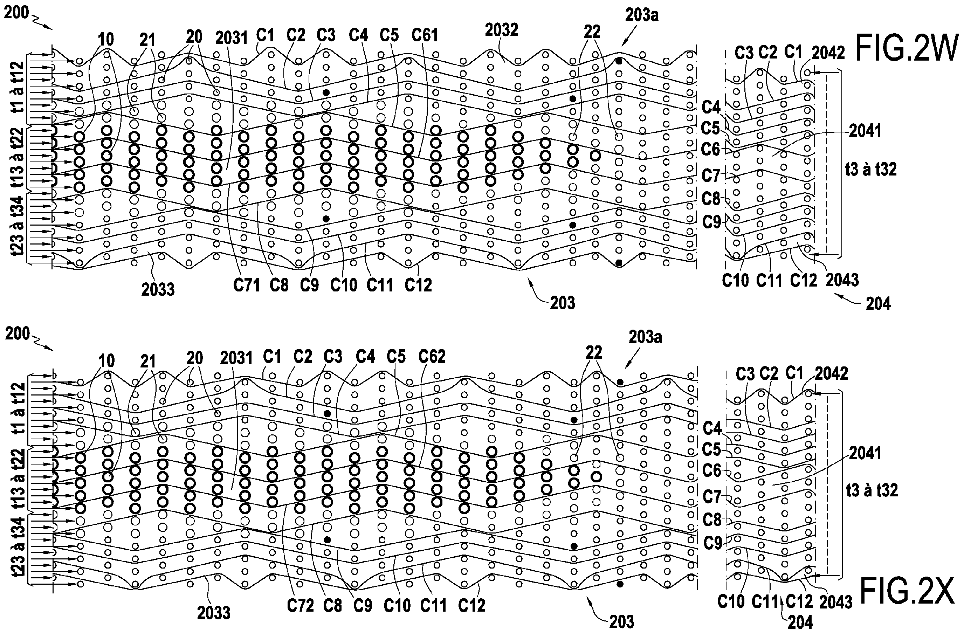

Les figures 2A à 2X représentent partiellement 24 plans successifs d'une armure de tissage de la partie de surépaisseur 203 et de la partie d'épaisseur décroissante 204 de la structure fibreuse 200 obtenues par tissage 3D, les couches de trame étant visibles en coupe.

La structure fibreuse 200 comprend, dans sa partie de surépaisseur 203, 17 couches de trame, soit 34 demi-couches t1 à t34. Dans le coeur 2031 situé entre les peaux opposées 2032 et 2033, le tissage 3D est de type interlock. Dans les peaux 2032 et 2033 le tissage est bidimensionnel avec une armure de type satin irrégulier. Le tissage satin ne concerne que les demi-couches de trame t1 et t2 et les demi-couches de trame t33 et t34. On notera que le tissage 3D interlock du coeur s'étend jusqu'aux demi-couches extrêmes t1, t34 des peaux afin de lier ces demi-couches à celles du coeur.

Dans sa partie d'épaisseur décroissante 204, des couches de trame sont progressivement retirées jusqu'à atteindre un nombre de couches de trame compatible avec la partie 205 destinée à former la pale de l'aube. Dans la portion de la partie d'épaisseur décroissante 204 représentée sur les figures 2A à 2X, la structure fibreuse comprend 15 couches de trame, soit 30 demi-couches t3 à t32. Dans le coeur 2041 situé entre les peaux opposées 2042 et 2043, le tissage 3D est de type interlock tandis que dans les peaux 2032 et 2033 le tissage est bidimensionnel avec une armure de type satin irrégulier qui ne concerne que les demi-couches de trame t3 et t4 et les demi-couches de trame t31 et t32.

Conformément à l'invention, des tresses sont utilisées dans les couches de trames les plus à coeur de la partie de surépaisseur 203 de la structure fibreuse 200. Dans l'exemple décrit ici, des tresses 10 sont utilisées dans les demi-couches t13 à t22. A titre d'exemple, chaque tresse peut être constituée de 8 fils présentant chacun un titre de 500K (500 filaments), ces fils étant tressés autour d'une âme composée de 2 fils côte-à-côte présentant chacun également un titre de 500K. Dans ce cas, le diamètre ou la section de la tresse est de 1,5 mm, l'angle de tressage des fils permettant d'obtenir une tresse dont la section globale est supérieure à l'addition des sections des fils présents dans la tresse. La nature et/ou le titre des fils utilisés dans la tresse peuvent être différents.

L'insertion des tresses 10 dans les couches de trame à coeur de la structure fibreuse permet d'augmenter de façon importante l'épaisseur de la structure fibreuse tout en contrôlant le taux moyen de fibres à coeur, ce qui n'est le cas lorsqu'on utilise des fils ayant un titre élevé. En effet, en utilisant des fils ayant un titre élevé à coeur de la structure, il est certes possible d'augmenter localement l'épaisseur de la structure mais cela entraîne une augmentation du taux moyen de fibres à coeur incompatible avec les propriétés mécaniques requises. Lorsque le taux moyen de fibres à coeur est trop élevé, il n'est pas possible d'avoir un réseau de porosités suffisant pour permettre un bon accès des constituants de la matrice au coeur de la structure fibreuse. La quantité de matrice présente à coeur est alors insuffisante, ce qui ne permet pas d'obtenir une pièce en matériau composite qui présente, de façon homogène, les propriétés mécaniques requises.

Ce problème est résolu par l'utilisation de tresses qui, grâce à leur section transversale importante et leur capacité à conserver leur structure tubulaire (pas d'écrasement de la tresse lors de son tissage dans la structure fibreuse), permettent d'augmenter localement l'épaisseur de la structure tout en limitant l'augmentation du taux moyen de fibres. On obtient ainsi une structure fibreuse qui offre dans ses parties de surépaisseur un très bon accès à coeur pour les constituants de la matrice lors de sa densification.

Comme illustré sur les figures 2A à 2X, on utilise ici le même nombre de fils de chaîne dans la portion de surépaisseur 203 que dans la partie d'épaisseur décroissante 204. A cet effet, les couches de fils de chaîne présentes à coeur dans la partie de surépaisseur 203 sont éclatées de manière à disposer d'un nombre de couches de fils de chaîne plus élevé dans la partie de surépaisseur 203 que dans la partie d'épaisseur décroissante 204. Les couches de fils de chaîne présentes au coeur de la partie de surépaisseur 203 présentent alors une contexture plus faible que les couches de fils de chaîne présentes dans la partie d'épaisseur décroissante 204. Par "contexture", on désigne ici le nombre de fils par unité de longueur en sens chaîne et en sens trame.

Dans le mode de réalisation décrit ici, la structure fibreuse 200 est tissée avec 12 couches de fils de chaîne C1 à C12. Les couches de fils de chaîne C6 et C7 présentes au coeur de la structure 200 sont chacune éclatées en deux couches C61, C62, d'une part, et C71 et C72, d'autre part, dans la partie de surépaisseur 203. Les couches C61, C62 ou C71, C72 présentent une contexture 2 fois inférieure à celle de la couche C6 ou C7 présente dans la partie d'épaisseur décroissante 204. Cette variation de contexture dans les couches de fils de chaîne présentes à coeur entre la partie de surépaisseur 203 et la partie d'épaisseur décroissante 204 permet de contrôler le taux de fibres à coeur de la partie 203. Cette variation de contexture seulement à coeur de la structure permet en outre de maintenir un ratio chaîne/trame satisfaisant, par exemple de l'ordre de 50%, en peau de la structure. On assure ainsi une bonne résistance mécanique à la surface de la pièce résultante.

Afin de contrôler le taux moyen de fibres entre le coeur et les peaux dans la partie de surépaisseur 203, les couches de trame situées à proximité des couches de trame comprenant les tresses comprennent des fils ou torons ayant un titre supérieur à celui des fils ou torons des couches de trame situées en peau de la partie de surépaisseur 203. Dans l'exemple décrit ici, les demi-couches de trame t9 à t12 et t23 à t26 présentes de chaque côté des demi-couches de trame t13 à t22 comprenant les tresses 10 comprennent, sur une longueur déterminée en direction chaîne, des fils 21 et 22 ayant un titre plus important que les fils 20 des demi-couches t1 à t8 et t27 à t34 situées en peau de la partie 203.

En outre, afin de contrôler le taux de fibres dans une zone 203a correspondant au passage entre la fin de la partie de surépaisseur 203 et le début partie d'épaisseur décroissante 204, c'est-à-dire la zone ou l'épaisseur de la structure fibreuse commence à diminuer, on diminue progressivement le nombre de tresses utilisé et/ou la section des tresses et/ou des torons des couches de trame présentes à coeur dans la structure fibreuse. Dans l'exemple décrit ici, les tresses 10 présentes dans les demi-couches de trame t13 à t22 dans la partie de surépaisseur 203 sont progressivement remplacées dans la direction chaîne par des torons ou fils 21 ou 22 ayant un titre correspondant à une section inférieure à celle des tresses 10. Les torons ou fils 21 ou 22 sont ensuite remplacés par des fils 20 ayant le même titre que les fils de trame 24 présents dans la partie d'épaisseur décroissante 204 et dans les peaux de la structure fibreuse. De même, dans les demi-couches de trame t9 à t12 et t23 à t26, les fils ou torons 21 sont remplacés progressivement dans la direction chaîne par des fils ou torons 22 ou par des fils 20 ayant une section inférieure.

La structure fibreuse selon l'invention peut être tissée notamment, mais non exclusivement, à partir de fils de fibres de carbone, de fibres céramique telle que du carbure de silicium, ou de fibres d'oxyde tel que de l'alumine.

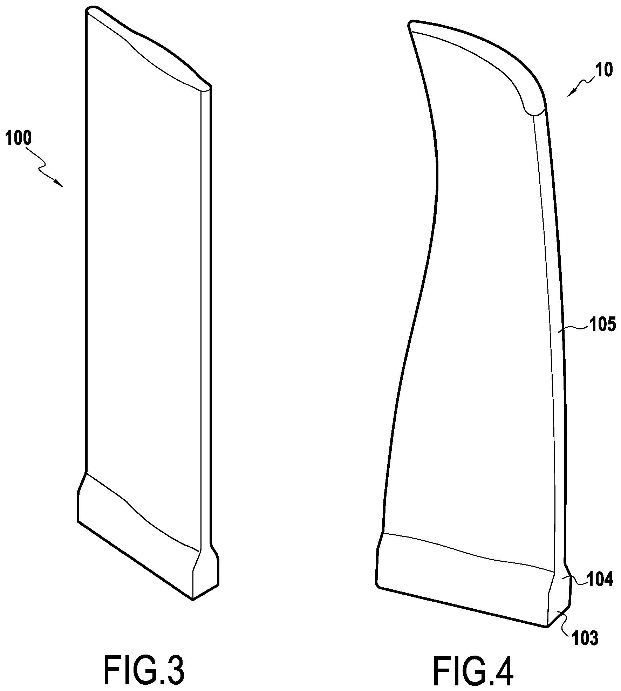

Une fois le tissage de la structure fibreuse 200 achevé, on découpe les fils non tissés. On obtient alors la préforme fibreuse 100 illustrée sur la figure 3 et tissée en une seule pièce.

On procède ensuite à la densification de la préforme fibreuse 100 afin de former une aube 10 en matériau composite illustrée sur la figure 4. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC).

Dans le cas de la réalisation d'une pièce en matériau composite oxyde/oxyde, la structure fibreuse est imprégnée avec une barbotine chargée de particules d'oxyde réfractaire. Après élimination de la phase liquide de la barbotine, la préforme ainsi obtenue est soumise à un traitement thermique afin de fritter les particules et obtenir une matrice d'oxyde réfractaire. L'imprégnation de la structure peut être réalisée avec des procédés utilisant un gradient de pression, comme les procédés de type moulage par injection dits « RTM » ou aspiration de poudre submicronique dits « APS ».

Après densification, on obtient une aube 10 en matériau composite qui, comme illustrée sur la figure 4, comporte dans sa partie inférieure un pied 103 formé par la partie de surépaisseur 203 de la structure fibreuse 200 qui se prolonge par une échasse 104 formée par la partie d'épaisseur décroissante 204 de la structure 200 et une pale 105 formée par la partie 205 de la structure fibreuse 200.

La structure fibreuse et son procédé de fabrication selon la présente invention peuvent notamment être utilisés pour réaliser des aubes de turbomachine présentant une géométrie plus complexe que l'aube représentée sur la figure 4, comme des aubes comportant, en outre de celle de la figure 4, une ou plusieurs plateformes permettant de réaliser des fonction comme celles d'étanchéité de veine, d'anti-basculement, etc..

## Revendications

1. Structure fibreuse (200) comprenant une pluralité de couches de trame (t1-t34) et de couches de chaîne (C1-C12) liées entre elles suivant un tissage tridimensionnel ou multicouche, la structure fibreuse (200) comprenant au moins des première et deuxième parties (203, 204) adjacentes dans la direction chaîne, la première partie (203) présentant, dans une direction perpendiculaire aux directions chaîne et trame, une épaisseur supérieure à l'épaisseur de la deuxième partie (204),
**caractérisée en ce que** des couches de trame (t13-t22) situées à coeur (2031) de la première partie (203) de la structure fibreuse (200) comprennent des tresses (10) et **en ce que** les couches de trame (t1-t12 ; t23-t34) s'étendant de chaque côté des couches de trame (t13-t22) comprenant les tresses (10) et jusqu'en peau (2032 ; 2033) de ladite première partie (203) comprennent des fils ou torons (20 ; 21 ; 22), les tresses (10) présentant une section supérieure à la section des fils ou torons (20 ; 21 ; 22).

2. Structure fibreuse selon la revendication 1, **caractérisée en ce que** les première et deuxième parties (203, 204) comprennent le même nombre de fils de chaîne tissés continûment entre lesdites première et deuxième parties (203, 204) et **en ce que** les couches de fils de chaîne présentes à coeur (2031) de la première partie (203) sont éclatées de manière à disposer d'un nombre de couches de fils de chaîne plus élevé dans la première partie que dans la deuxième partie.

3. Structure fibreuse selon la revendication 1 ou 2, **caractérisée en ce qu'**une ou plusieurs couches de trame (t9-t12 ; t23-t26) situées au voisinage des couches de trame (t13-t22) comprenant les tresses (10) comprennent des fils ou torons (20 ; 21 ; 22) ayant un titre supérieur au titre des fils ou torons (20) des couches de trame (t1-t8 ; t27-t34) situées en peau (2032 ; 2033) de la première partie (203).

4. Structure fibreuse selon l'une quelconque des revendications 1 à 3, **caractérisée en ce qu'**au moins une partie des couches de trame (t13-t22) situées à coeur (2031) de la première partie comprennent des tresses ou des fils ou torons (20 ; 21 ; 22) ayant une section décroissante en direction de la deuxième partie (204).

5. Structure fibreuse selon l'une quelconque des revendications 1 à 4, **caractérisée en ce que** les tresses (10) présentent un angle de tressage d'environ 45°.

6. Pièce (10) en matériau composite comprenant un renfort fibreux densifié par une matrice, ledit renfort fibreux étant constitué par une structure fibreuse (200) selon l'une quelconque des revendications 1 à 5.

7. Pièce selon la revendication 6, ladite pièce correspondant à une aube de turbine, la première partie (203) de la structure fibreuse constituant la partie de pied d'aube du renfort fibreux.

8. Procédé de fabrication d'une structure fibreuse (200) par tissage tridimensionnel ou multicouche entre une pluralité de couches de trame (t1-t34) et de couches de chaîne (C1-C12), la structure fibreuse (200) comprenant au moins des première et deuxième parties adjacentes (203, 204) dans la direction chaîne, la première partie (203) présentant, dans une direction perpendiculaire aux directions chaîne et trame, une épaisseur supérieure à l'épaisseur de la deuxième partie (204),
**caractérisé en ce qu'**on insert des tresses (10) dans les couches de trame (t13-t22) situées à coeur (2031) de la première partie (203) de la structure fibreuse (200) et **en ce qu'**on utilise des fils ou torons (20 ; 21 ; 22) dans les couches de trame (t1-t12 ; t23-t34) s'étendant de chaque côté des couches de trame (t13-t22) comprenant des tresses (10) et jusqu'en peau (2032 ; 2033) de ladite première partie (203), les tresses (10) présentant une section supérieure à la section des fils ou torons (20 ; 21 ; 22).

9. Procédé selon la revendication 8, **caractérisé en ce que** les première et deuxième parties (203, 204) comprennent le même nombre de fils de chaîne tissés continûment entre lesdites première et deuxième parties et **en ce que** les couches de fils de chaîne présentes à coeur (2031) de la première partie (203) sont éclatées de manière à disposer d'un nombre de couches de fils de chaîne plus élevé dans la première partie que dans la deuxième partie.

10. Procédé selon la revendication 8 ou 9, **caractérisé en ce qu'**une ou plusieurs couches de trame (t9-t12 ; t23-t26) situées au voisinage des couches de trame (t13-t22) comprenant les tresses (10) comprennent des fils ou torons (20 ; 21 ; 22) ayant un titre supérieur au titre des fils ou torons (20) des couches de trame (tl-t8 ; t27-t34) situées en peau (2032 ; 2033) de la première partie (203).

11. Procédé selon l'une quelconque des revendications 8 à 10, **caractérisé en ce qu'**au moins une partie des couches de trame (t13-t22) situées à coeur (2031) de la première partie comprennent des tresses ou des fils ou torons (20 ; 21 ; 22) ayant une section décroissante en direction de la deuxième partie (204).

12. Procédé selon l'une quelconque des revendications 8 à 11, **caractérisée en ce que** les tresses présentent un angle de tressage d'environ 45°.

## Patentansprüche

1. Fasergebilde (200) umfassend eine Vielzahl von Schusslagen (t1-t34) und Kettlagen (C1-C12), die untereinander in Folge einer dreidimensionalen oder mehrlagigen Verwebung verbunden sind, wobei das Fasergebilde (200) zumindest erste und zweite in der Kettrichtung benachbarte Teile (203, 204) umfasst, wobei der erste Teil (203) in einer Richtung senkrecht auf die Kett- und Schussrichtungen eine größere Dicke als die Dicke des zweiten Teils (204) aufweist,
**dadurch gekennzeichnet, dass** die Schusslagen (t13-t22), die sich im Kern (2031) des ersten Teils (203) des Fasergebildes (200) befinden, Tressen (10) umfassen, und dass die Schusslagen (t1-t12; t23-t34), die sich von jeder Seite der Schusslagen (t13-t22), welche die Tressen (10) umfassen, und bis zu der Außenseite (2032; 2033) des ersten Teils (203) erstrecken, Fäden oder Litzen (20; 21; 22) umfassen, wobei die Tressen (10) einen größeren Querschnitt aufweisen als der Querschnitt der Fäden oder Litzen (20; 21; 22).

2. Fasergebilde nach Anspruch 1, **dadurch gekennzeichnet, dass** der erste und zweite Teil (203, 204) dieselbe Anzahl von Kettfäden umfassen, die durchgehend zwischen dem ersten und zweiten Teil (203, 204) verwoben sind, und dass die Kettfadenlagen, die im Kern (2031) des ersten Teils (203) vorliegen, auf solche Weise aufgesplittet sind, dass sie über eine Kettfadenlagenanzahl verfügen, die in dem ersten Teil höher ist als in dem zweiten Teil.

3. Fasergebilde nach Anspruch 1 oder 2, **dadurch gekennzeichnet, dass** eine oder mehrere Schusslagen (t9-t12; t23-t26), die sich in der Umgebung der Schusslagen (t13-t22) umfassend die Tressen (10) befinden, Fäden oder Litzen (20; 21; 22) mit einer Anzahl umfassen, die höher ist als die Anzahl der Fäden oder Litzen (20) der Schusslagen (t1-t8; t27-t34), die sich an der Außenseite (2032; 2033) des ersten Teils (203) befinden.

4. Fasergebilde nach einem der Ansprüche 1 bis 3, **dadurch gekennzeichnet, dass** zumindest ein Teil der Schusslagen (t13-t22), die sich im Kern (2031) des ersten Teils befinden, Tressen oder Fäden oder Litzen (20; 21; 22) mit einem Querschnitt umfasst, der in der Richtung des zweiten Teils (204) abnimmt.

5. Fasergebilde nach einem der Ansprüche 1 bis 4, **dadurch gekennzeichnet, dass** die Tressen (10) einen Flechtwinkel von ungefähr 45° aufweisen.

6. Werkstück (10) aus Verbundmaterial umfassend eine Faserverstärkung, die durch eine Matrix verdichtet ist, wobei die Faserverstärkung aus einem Fasergebilde (200) nach einem der Ansprüche 1 bis 5 besteht.

7. Werkstück nach Anspruch 6, wobei das Werkstück einer Turbinenschaufel entspricht, wobei der erste Teil (203) des Fasergebildes den Schaufelfußteil der Faserverstärkung bildet.

8. Verfahren zur Herstellung eines Fasergebildes (200) durch dreidimensionale oder mehrlagige Verwebung zwischen einer Vielzahl von Schusslagen (t1-t34) und Kettlagen (C1-C12), wobei das Fasergebilde (200) zumindest erste und zweite in der Kettrichtung benachbarte Teile (203, 204) umfasst, wobei der erste Teil (203) in einer Richtung senkrecht auf die Kett- und Schussrichtungen eine größere Dicke als die Dicke des zweiten Teils (204) aufweist,
**dadurch gekennzeichnet, dass** die Tressen (10) in den Schusslagen (t13-t22), die sich im Kern (2031) des ersten Teils (203) des Fasergebildes (200) befinden, eingesetzt werden, und dass Fäden oder Litzen (20; 21; 22) in den Schusslagen (t1-t12; t23-t34) verwendet werden, die sich von jeder Seite der Schusslagen (t13-t22) umfassend die Tressen (10) und bis zu der Außenseite (2032; 2033) des ersten Teils (203) erstrecken, wobei die Tressen (10) einen Querschnitt aufweisen, der größer ist als der Querschnitt der Fäden oder Litzen (20; 21; 22).

9. Verfahren nach Anspruch 8, **dadurch gekennzeichnet, dass** der erste und zweite Teil (203, 204) dieselbe Anzahl von Kettfäden umfassen, die durchgehend zwischen dem ersten und zweiten Teil verwoben sind, und dass die Kettfadenlagen, die im Kern (2031) des ersten Teils (203) vorliegen, auf solche Weise aufgesplittet sind, dass sie über eine Kettfadenlagenanzahl verfügen, die in dem ersten Teil höher ist als in dem zweiten Teil.

10. Verfahren nach Anspruch 8 oder 9, **dadurch gekennzeichnet, dass** eine oder mehrere Schusslagen (t9-t12; t23-t26), die sich in der Umgebung der Schusslagen (t13-t22) umfassend die Tressen (10) befinden, Fäden oder Litzen (20; 21; 22) mit einer Anzahl umfassen, die höher ist als die Anzahl der Fäden oder Litzen (20) der Schusslagen (t1-t8; t27-t34), die sich an der Außenseite (2032; 2033) des ersten Teils (203) befinden.

11. Verfahren nach einem der Ansprüche 8 bis 10, **dadurch gekennzeichnet, dass** zumindest ein Teil der Schusslagen (t13-t22), die sich im Kern (2031) des ersten Teils befinden, Tressen oder Fäden oder Litzen (20; 21; 22) mit einem Querschnitt umfasst, der in der Richtung des zweiten Teils (204) abnimmt.

12. Verfahren nach einem der Ansprüche 8 bis 11, **dadurch gekennzeichnet, dass** die Tressen einen Flechtwinkel von ungefähr 45° aufweisen.

## Claims

1. A fiber structure (200) comprising a plurality of weft layers (t1-t34) and a plurality of warp layers (C1-C12) interlinked with three-dimensional or multilayer weaving, the fiber structure (200) comprising at least first and second portions (203, 204) that are adjacent in the warp direction, the first portion (203) presenting thickness in a direction perpendicular to the warp and weft directions that is greater than the thickness of the second portion (204), the structure being **characterized in that** the weft layers (t13-t22) situated in the core (2031) of the first portion (203) of the fiber structure (200) comprise braids (10), and **in that** the weft layers (t1-t12; t23-t34) extending on either side of the weft layers (t13-t22) comprising the braids (10) and going as far as the skin (2032; 2033) of said first portion (203) comprise yarns or strands (20; 21; 22), the braids (10) presenting a section greater than the section of the yarns or strands (20; 21; 22).

2. A fiber structure according to claim 1, **characterized in that** the first and second portions (203, 204) comprise the same number of warp yarns woven continuously between said first and second portions (203, 204), and **in that** the layers of warp yarns present in the core (2031) of the first portion (203) are burst so as to have a greater number of layers of warp yarns in the first portion than in the second portion.

3. A fiber structure according to claim 1 or claim 2, **characterized in that** one or more weft layers (t9-t12; t23-t26) situated in the vicinity of the weft layers (t13-t22) comprising the braids (10) comprise yarns or strands (20; 21; 22) of weight greater than the weight of the yarns or strands (20) of the weft layers (t1-t8; t27-t34) situated in the skin (2032; 2033) of the first portion (203).

4. A fiber structure according to any one of claims 1 to 3, **characterized in that** at least some of the weft layers (t13-t22) situated in the core (2031) of the first portion comprise braids or yarns or strands (20; 21; 22) of section that decreases going towards the second portion (204).

5. A fiber structure according to any one of claims 1 to 4, **characterized in that** the braids (10) present a braiding angle of about 45°.

6. A part (10) made of composite material comprising fiber reinforcement densified by a matrix, said fiber reinforcement being constituted by a fiber structure (200) according to any one of claims 1 to 5.

7. A part according to claim 6, said part corresponding to a turbine blade, the first portion (203) of the fiber structure constituting the blade root portion of the fiber reinforcement.

8. A method of fabricating a fiber structure (200) by three-dimensional or multilayer weaving between a plurality of weft layers (t1-t34) and a plurality of warp layers (C1-C12), the fiber structure (200) comprising at least first and second portions (203, 204) that are adjacent in the warp direction, the first portion (203) presenting thickness in a direction perpendicular to the warp and weft directions that is greater than the thickness of the second portion (204), the method being **characterized in that** braids (10) are inserted in the weft layers (t13-t22) situated in the core (2031) of the first portion (203) of the fiber structure (200), and **in that** yarns or strands (20; 21; 22) are used in the weft layers (t1-t12; t23-t34) extending on either side of the weft layers (t13-t22) comprising braids (10) and going as far as the skin (2032; 2033) of said first portion (203), the braids (10) presenting a section greater than the section of the yarns or strands (20; 21; 22).

9. A method according to claim 8, **characterized in that** the first and second portions (203, 204) comprise the same number of warp yarns woven continuously between said first and second portions, and **in that** the layers of warp yarns present in the core (2031) of the first portion (203) are burst so as to have a greater number of layers of warp yarns in the first portion than in the second portion.

10. A method according to claim 8 or claim 9, **characterized in that** one or more weft layers (t9-t12; t23-t26) situated in the vicinity of the weft layers (t13-t22) comprising the braids (10) comprise yarns or strands (20; 21; 22) of weight greater than the weight of the yarns or strands (20) of the weft layers (t1-t8; t27-t34) situated in the skin (2032; 2033) of the first portion (203).

11. A method according to any one of claims 8 to 10, **characterized in that** at least some of the weft layers (t13-t22) situated in the core (2031) of the first portion comprise braids or yarns or strands (20; 21; 22) of section that decreases going towards the second portion (204).

12. A method according to any one of claims 8 to 11, **characterized in that** the braids present a braiding angle of about 45°.
